# EUROPEAN PATENT APPLICATION

(11) **EP 4 763 547 A1**
(43) Date of publication of application: **24.06.2026**
(21) Application number: 24853664.1
(22) Date of filing: 08.08.2024
(51) Int. Cl.: B60H 1/00

(54) **THERMAL MANAGEMENT SYSTEM AND VEHICLE**

(30) Priority: 14.08.2023 CN 202311022477
(71) Applicant: Beijing Chehejia Automobile Technology Co., Ltd., Beijing 101300 (CN)
(72) Inventor: LUAN, Zhongjun, Beijing 101300 (CN); DONG, Junqi, Beijing 101300 (CN); PANG, Qicong, Beijing 101300 (CN); DONG, Pengzhen, Beijing 101300 (CN)
(74) Representative: Maiwald GmbH
(86) International application number: PCT/CN2024/110764
(87) International publication number: WO 2025/036254

(57) **Abstract**

A thermal management system, comprising a compressor (101), a water-cooled condenser (102), a first throttle valve (103), a battery heat exchanger (104), and a battery cooler (105), A refrigerant outlet of the compressor (101) is in communication with an inlet of a refrigerant flow channel of the water-cooled condenser (102); an outlet of the refrigerant flow channel of the water-cooled condenser (102) is in communication with an inlet of a refrigerant flow channel of the battery cooler (105) by means of the first throttle valve (103); an outlet of a cooling liquid flow channel of the water-cooled condenser (102) is in communication with an inlet of a cooling liquid flow channel of the battery heat exchanger (104); an outlet of the cooling liquid flow channel of the battery heat exchanger (104) is in communication with an inlet of a cooling liquid flow channel of the battery cooler (105); and an outlet of the refrigerant flow channel of the battery cooler (105) is in communication with a refrigerant inlet of the compressor (101). In a low-temperature or extremely low-temperature environment, a low-temperature low-pressure liquid refrigerant absorbs heat and evaporates in the battery cooler (105) to form a gaseous refrigerant, the gaseous refrigerant is provided to the compressor (101), and the compressor (101) continuously performs high-power compression work to produce heat, so that a heat pump subsystem in the thermal management system has a relatively strong heating capability, so as to meet the heat requirements of a thermal management object such as a power battery. Also disclosed is a vehicle.

## Description

### CROSS-REFERENCE TO RELATED APPLICATION

The present invention is based on and claims priority to Chinese Patent Application No. 202311022477.5, filed on August 14, 2023, the entire content of which is incorporated into the present invention by reference.

### FIELD

The present invention relates to the field of thermal management technologies, and more particularly to a thermal management system and a vehicle.

### BACKGROUND

An electric vehicle is provided with a thermal management system. When the vehicle is in a powered-on state, the thermal management system performs thermal management on a power battery to keep the power battery within an optimal charging and discharging temperature range. In a related art, the thermal management system uses a heat pump subsystem heating mode to perform thermal management on the power battery. The heat pump subsystem includes a compressor, a water-cooled condenser, a throttle valve, and a refrigerant-air heat exchanger. When an indirect heat pump system operates, the compressor compresses gaseous refrigerant into high-temperature and high-pressure refrigerant; subsequently, the high-temperature and high-pressure refrigerant flows through a refrigerant channel of the water-cooled condenser and transfers heat via heat conduction to coolant for heating the power battery, becoming medium-low temperature and high-pressure refrigerant; thereafter, the medium-low temperature and high-pressure refrigerant is throttled by the throttle valve into low-temperature and low-pressure liquid refrigerant. The low-temperature and low-pressure refrigerant absorbs heat when flowing through the refrigerant-air heat exchanger and vaporizes into gaseous refrigerant, and then flows back to the compressor.

Based on the foregoing analysis, the heating capacity of the heat pump subsystem is related to the amount of heat absorbed by the refrigerant in the refrigerant-air heat exchanger. As an ambient temperature around the refrigerant-air heat exchanger decreases, the heat absorbed by the refrigerant at this component also gradually decreases. When the ambient temperature is excessively low, the refrigerant cannot sufficiently absorb heat and vaporize, and thus remains in a gas-liquid two-phase state or a liquid state. In this case, the compressor cannot operate at high power, which results in the heat pump subsystem being unable to generate heat by utilizing a compression work characteristic of the compressor.

### SUMMARY

In order to solve the above technical problems, embodiments of the present invention provide a thermal management system and a vehicle.

In a first aspect, embodiments of the present invention provide a thermal management system, including a compressor, a water-cooled condenser, a first throttle valve, a battery heat exchanger, and a battery cooler;
a refrigerant outlet of the compressor is in communication with an inlet of a refrigerant channel of the water-cooled condenser; and an outlet of the refrigerant channel of the water-cooled condenser is in communication with an inlet of a refrigerant channel of the battery cooler via the first throttle valve; and
an outlet of a coolant channel of the water-cooled condenser is in communication with an inlet of a coolant channel of the battery heat exchanger; an outlet of the coolant channel of the battery heat exchanger is in communication with an inlet of a coolant channel of the battery cooler, and an outlet of the refrigerant channel of the battery cooler is in communication with a refrigerant inlet of the compressor.

Optionally, the thermal management system further includes a power device heat exchanger;
in a target operating mode, an inlet of a coolant channel of the power device heat exchanger is in communication with an outlet of the coolant channel of the battery cooler; and
an outlet of the coolant channel of the power device heat exchanger is in communication with an inlet of the coolant channel of the water-cooled condenser.

Optionally, the thermal management system further includes a four-way valve;
a first port of the four-way valve is in communication with the outlet of the refrigerant channel of the water-cooled condenser, a second port of the four-way valve is in communication with an inlet of a refrigerant channel of the battery heat exchanger, a third port of the four-way valve is in communication with the outlet of the refrigerant channel of the battery cooler, and a fourth port of the four-way valve is in communication with an inlet of a refrigerant channel of the power device heat exchanger; and
in the target operating mode, the third port of the four-way valve is in communication with the fourth port of the four-way valve, so that the inlet of the coolant channel of the power device heat exchanger is in communication with the outlet of the coolant channel of the battery cooler.

Optionally, the thermal management system further includes a first three-way valve;
a first port of the first three-way valve is in communication with the second port of the four-way valve, a second port of the first three-way valve is in communication with an outlet of the refrigerant channel of the battery heat exchanger, and a third port of the first three-way valve is in communication with the inlet of the refrigerant channel of the battery cooler; and
in the target operating mode, the second port of the first three-way valve is in communication with the third port of the first three-way valve, so that the outlet of the coolant channel of the battery heat exchanger is in communication with the inlet of the coolant channel of the battery cooler.

Optionally, the thermal management system further includes an electric heater; and
an inlet of a coolant channel of the electric heater is in communication with the second port of the four-way valve, and an outlet of the coolant channel of the electric heater is in communication with the first port of the first three-way valve and the inlet of the coolant channel of the battery heat exchanger.

Optionally, the thermal management system further includes a refrigerant-air heat exchanger and a second throttle valve; and
an inlet of a refrigerant channel of the refrigerant-air heat exchanger is in communication with the outlet of the refrigerant channel of the water-cooled condenser via the second throttle valve, and an outlet of the refrigerant channel of the refrigerant-air heat exchanger is in communication with the first throttle valve.

Optionally, the thermal management system further includes a first bypass valve; and
a refrigerant inlet of the first bypass valve is in communication with the inlet of the refrigerant channel of the refrigerant-air heat exchanger, and a refrigerant outlet of the first bypass valve is in communication with the outlet of the refrigerant channel of the refrigerant-air heat exchanger; and the first bypass valve is configured to be opened in a target operating mode to bypass the refrigerant-air heat exchanger.

Optionally, the thermal management system further includes a first one-way valve; and
a refrigerant inlet of the first one-way valve is in communication with the outlet of the refrigerant channel of the refrigerant-air heat exchanger; and the first one-way valve is configured to prevent refrigerant from flowing back into the refrigerant-air heat exchanger in a case that the refrigerant-air heat exchanger is bypassed.

Optionally, the thermal management system further includes a cabin evaporator; and
an inlet of a refrigerant channel of the cabin evaporator is in communication with the refrigerant outlet of the compressor, and an outlet of the refrigerant channel of the cabin evaporator is in communication with the inlet of the refrigerant channel of the water-cooled condenser.

Optionally, the thermal management system further includes a water-cooled air radiator and a second three-way valve;
an inlet of a coolant channel of the water-cooled air radiator is in communication with the outlet of the coolant channel of the water-cooled condenser; and
a first port of the second three-way valve is in communication with the outlet of the coolant channel of the water-cooled condenser, a second port of the second three-way valve is in communication with an outlet of the coolant channel of the water-cooled air radiator, and a third port of the second three-way valve is in communication with the inlet of the coolant channel of the battery heat exchanger.

Optionally, the thermal management system further includes a cabin evaporator and a third throttle valve; and
an inlet of a refrigerant channel of the cabin evaporator is in communication with the outlet of the refrigerant channel of the water-cooled condenser via the third throttle valve.

In a second aspect, embodiments of the present invention provide a vehicle including the thermal management system as described above.

The technical solution provided in the embodiments of the present invention has the following advantages compared with the related art:
When the thermal management system adopting the solution provided by the embodiments of the present invention performs battery heating management, a temperature of coolant flowing out of the coolant channel of the battery heat exchanger and into the battery cooler is relatively high, and a large temperature difference exists between this coolant and a low-temperature and low-pressure refrigerant in the refrigerant channel of the battery cooler, which enabling heat conduction in the battery cooler. Heat is thus transferred from the coolant via the battery cooler to the low-temperature and low-pressure liquid refrigerant, so that the low-temperature and low-pressure liquid refrigerant absorbs heat and evaporates into gaseous refrigerant. In specific implementations, by allowing the refrigerant passing through the battery cooler to continuously turn into gaseous refrigerant, a sufficient amount of gaseous refrigerant consistently flows to the refrigerant inlet of the compressor. Since sufficient gaseous refrigerant flows into the compressor via the refrigerant inlet, the compressor may continuously compress and perform work at high power, thereby generating heat through compression work and transferring the generated heat to the refrigerant.

In other words, through the solution provided by the embodiments of the present invention, in a low-temperature or extremely low-temperature environment, since a sufficient amount of gaseous refrigerant is supplied to the compressor, the compressor may continuously compress and perform work at high power to generate heat, so that a heat pump subsystem in the thermal management system has a strong heating capability to meet the thermal demands of a thermal management object such as the power battery as much as possible.

### BRIEF DESCRIPTION OF THE DRAWINGS

The drawings herein are incorporated into the specification and form a part of the specification, show embodiments that comply with the present invention, and are used to explain the principles of the present invention together with the specification.

To illustrate the technical solutions in embodiments of the present invention or the technical solutions in the prior art more clearly, the following will briefly introduce the accompanying drawings required for describing the embodiments or the prior art. It is obvious that for those skilled in the art, other accompanying drawings may also be obtained according to these accompanying drawings without creative labor, in which,
FIG. 1 is a schematic diagram of a thermal management system according to an embodiment of the present invention;
FIG. 2 is a schematic diagram of a thermal management system according to another embodiment of the present invention;
FIG. 3 is a schematic diagram illustrating a cyclic operation of a thermal management system in a power battery cooling mode according to some embodiments;
FIG. 4 is a schematic diagram illustrating a cyclic operation of a thermal management system in a cabin cooling mode according to some embodiments;
FIG. 5 is a schematic diagram illustrating a cyclic operation of a thermal management system in a combined cooling mode according to some embodiments;
FIG. 6 is a schematic diagram illustrating a cyclic operation of a thermal management system in a cabin heating mode according to some embodiments;
FIG. 7 is a schematic diagram illustrating a cyclic operation of a thermal management system in a heat pump system heating mode according to some embodiments;
FIG. 8 is a schematic diagram illustrating a cyclic operation of a thermal management system in a cabin dehumidification and heating mode according to some embodiments;
FIG. 9 is a schematic diagram illustrating a cyclic operation of a thermal management system in a dual-evaporation dehumidification mode according to some embodiments; and
FIG. 10 is a schematic diagram of a control device according to an embodiment of the present invention.

### DETAILED DESCRIPTION

Embodiments of the present invention will be described in more detail below with reference to the accompanying drawings. Although certain embodiments of the present invention are shown in the accompanying drawings, it should be understood that the present invention may be implemented in various forms and should not be construed as limited to the embodiments described herein. Rather, these embodiments are provided for a more thorough and complete understanding of the present invention. It should be understood that the accompanying drawings and embodiments of the present invention are for exemplary purposes only and are not intended to limit the protection scope of the present invention.

The term "comprise/include" and its variations as used herein are open-ended, i.e., "comprise/include but not limited to". The term "based on" means "at least partially based on". The term "an embodiment" means "at least one embodiment"; the term "another embodiment" means "at least one additional embodiment"; the term "some embodiments" means "at least some embodiments". The relevant definitions of other terms will be given in the description below. It should be noted that the concepts of "first", "second", etc., mentioned in the present invention are only used to distinguish different devices, modules, or units and are not intended to limit the order or interdependence of the functions performed by these devices, modules, or units.

It should be noted that the modifiers "a/an" and "a plurality of" mentioned in the present invention are illustrative rather than restrictive. Those skilled in the art should understand that unless otherwise explicitly stated in the context, they should be understood as "one or more".

To solve the problem that an existing vehicle thermal management system cannot accumulate sufficient heat through refrigerant at a low temperature or an extremely low temperature, thereby failing to adequately start a compressor to perform work and generate heat, embodiments of the present invention provide a new thermal management system. The new thermal management system accumulates heat from coolant flowing out of a battery heat exchanger to achieve sufficient vaporization of the refrigerant and ensure the amount of vaporized refrigerant, thereby enabling the compressor to adequately compress and perform work to generate heat.

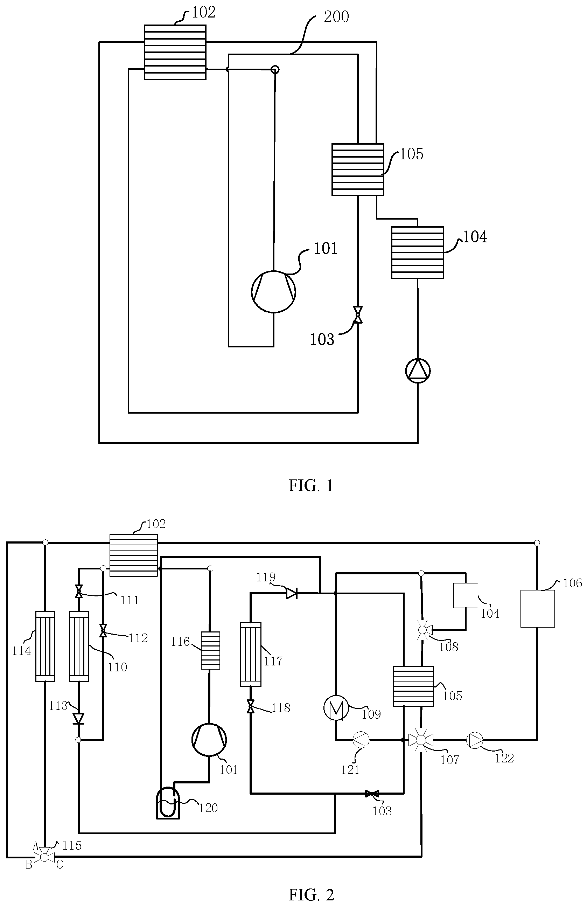

FIG. 1 is a schematic diagram of a thermal management system according to an embodiment of the present invention. As shown in FIG. 1, the thermal management system provided in embodiments of the present invention includes a compressor 101, a water-cooled condenser 102, a first throttle valve 103, a battery heat exchanger 104, a battery cooler 105, and a drive water pump (not labeled in the drawings).

The water-cooled condenser 102 is a heat exchanger configured to cool a compressed high-temperature and high-pressure refrigerant and transfer heat from the high-temperature and high-pressure refrigerant to coolant. The water-cooled condenser 102 includes a refrigerant channel and a coolant channel.

The battery heat exchanger 104 is a heat exchanger configured to transfer heat from the coolant to a power battery, thereby heating the power battery. The battery heat exchanger 104 includes a coolant channel. In practical applications, depending on the operating mode, i.e., depending on ambient temperature and power battery temperature, the battery heat exchanger 104 may also be configured to transfer heat from the power battery to the coolant. Therefore, the battery heat exchanger 104 is not named "battery radiator" herein.

The battery cooler 105 is a heat exchanger configured to transfer heat from the coolant to the refrigerant, thereby causing a low-temperature and low-pressure refrigerant to evaporate and vaporize. The battery cooler 105 includes a refrigerant channel and a coolant channel.

The drive water pump is configured to drive the flow of coolant.

In the embodiments of the present invention, the compressor 101, the water-cooled condenser 102, the first throttle valve 103, and the battery heat exchanger 104 are connected in series to form a refrigerant circuit. Specifically, a refrigerant outlet of the compressor 101 is in communication with an inlet of the refrigerant channel of the water-cooled condenser 102 via a connecting pipeline. An outlet of the refrigerant channel of the water-cooled condenser 102 is in communication with an inlet of the refrigerant channel of the battery cooler 105 via the first throttle valve 103. An outlet of the refrigerant channel of the battery cooler 105 is in communication with a refrigerant inlet of the compressor 101 via a connecting pipeline.

During operation, gaseous refrigerant is compressed by the compressor 101 to form a high-temperature and high-pressure refrigerant. The high-temperature and high-pressure refrigerant releases heat and cools down when passing through the water-cooled condenser 102 to become a medium-low temperature and high-pressure refrigerant. Subsequently, the medium-low temperature and high-pressure refrigerant is throttled by the first throttle valve 103 into a low-temperature and low-pressure refrigerant, then enters the battery heat exchanger 104, and absorbs heat and evaporates in the battery cooler 105, thus turning back into gaseous refrigerant and flowing back to the compressor 101.

In embodiments of the present invention, the water-cooled condenser 102 and the battery heat exchanger 104 are connected in series to form a coolant circuit. Specifically, an outlet of the coolant channel of the water-cooled condenser 102 is in communication with an inlet of the coolant channel of the battery heat exchanger 104. An inlet of the coolant channel of the water-cooled condenser 102 is in communication with an outlet of the coolant channel of the battery cooler 105. Driven by the drive water pump, the coolant circulates between the water-cooled condenser 102 and the battery heat exchanger 104. In embodiments of the present invention, the coolant absorbs heat and increases in temperature at the water-cooled condenser 102, and releases heat and decreases in temperature at the battery heat exchanger 104.

In a low-temperature environment, due to a low ambient temperature, a temperature of the power battery is higher than a surrounding ambient temperature, which causes the power battery to dissipate heat. To maintain the temperature of the power battery within an optimal charging and discharging temperature range, it is necessary to heat the power battery, i.e., to supply heat to the power battery by using the coolant.

According to the law of entropy increase, heat is spontaneously transferred from a higher-temperature problem to a lower-temperature object. To maintain the temperature of the power battery within the optimal charging and discharging temperature range and enable part of the heat in the coolant to be transferred to the power battery through the battery heat exchanger 104, a temperature of the coolant flowing into the battery heat exchanger 104 should be higher than the temperature of the power battery. Furthermore, a temperature of the coolant flowing out of the battery heat exchanger 104 will be at least equal to the temperature of the power battery. In practical applications, the optimal charging and discharging temperature range for the power battery is a relatively high temperature range (e.g., around 25°C). That is to say, the coolant flowing out of the battery heat exchanger 104 and then flowing into the battery cooler 105 has a relatively high temperature and stores a significant amount of heat.

Because the temperature of the coolant flowing through the battery cooler 105 is relatively high, a large temperature difference exists between the coolant in the coolant channel of the battery cooler 105 and the low-temperature and low-pressure refrigerant in the refrigerant channel of the battery cooler 105. Therefore, heat conduction occurs within the battery cooler 105, and heat is transferred from the coolant via the battery cooler 105 to the low-temperature and low-pressure refrigerant, so that the low-temperature and low-pressure refrigerant absorbs heat and evaporates into a gaseous refrigerant. In a case that the coolant flowing through the battery cooler 105 maintains a relatively high temperature, the low-temperature and low-pressure refrigerant passing through the battery cooler 105 may continuously absorb heat and evaporate into a gaseous refrigerant.

Since the refrigerant passing through the battery cooler 105 may continuously turn into gaseous refrigerant, an adequate amount of gaseous refrigerant consistently flows to the refrigerant inlet of the compressor 101. Because sufficient gaseous refrigerant flows into the compressor 101 via the refrigerant inlet, the compressor 101 may continuously operate at high power to compress and perform work, thereby generating heat through compression work and transferring the generated heat to the refrigerant. In other words, through the solution provided by the embodiments of the present invention, in a low-temperature or extremely low-temperature environment, since a sufficient amount of gaseous refrigerant is supplied to the compressor 101, the compressor 101 may continuously compress and perform work at high power to generate heat, so that a heat pump subsystem in the thermal management system has a strong heating capability to meet the thermal demands of a thermal management object such as the power battery as much as possible.

FIG. 2 is a schematic diagram of a thermal management system according to another embodiment of the present invention. As shown in FIG. 2, in another embodiment, the thermal management system also includes components mentioned in the previous embodiments, such as the compressor 101, the water-cooled condenser 102, the first throttle valve 103, the battery heat exchanger 104, and the battery cooler 105. Moreover, the aforementioned components may still be connected according to the connection method of the previous embodiments to form the refrigerant circuit and the coolant circuit (it should be noted that when connected according to the connection mode in the previous embodiments, some direct connections or direct connections via pipelines may become relay connections through other components). For convenience, the following mainly analyzes parts of the embodiments of the present invention that differ from the previous embodiments, and no longer analyzes parts with the same or substantially similar connection relationship as the previous embodiments.

In addition to the components mentioned above, the embodiments of the present invention further include a power device heat exchanger 106. The power device heat exchanger 106 is a heat exchanger configured for realizing heat exchange of a power device. In specific implementations, the power device heat exchanger 106 may include a drive motor heat exchanger and a controller heat exchanger.

The power device heat exchanger 106 includes a coolant channel, and heat exchange occurs when the coolant flows through this coolant channel. Specifically, when a temperature of the coolant flowing through the power device heat exchanger 106 is lower than a temperature of the power device heat exchanger 106, the power device heat exchanger 10 acts as a heat dissipator. When the temperature of the coolant flowing through the power device heat exchanger 106 is higher than the temperature of the power device heat exchanger 106, the power device heat exchanger 106 acts as a heat absorber.

An inlet of the coolant channel of the power device heat exchanger 106 may be in communication with the outlet of the coolant channel of the battery cooler 105. When a vehicle drive motor operates under certain working states, such as a high-speed operation state or a locked-rotor operation state, the power device (i.e., the aforementioned drive motor and controller) will generate a large amount of heat. By providing the power device heat exchanger 106, the coolant flowing through the coolant channel of the power device heat exchanger 106 may absorb the heat generated by the power device during operation. The heat generated by the power device during operation may be configured to heat thermal management components or be transferred to the refrigerant. When the heat demand of the thermal management object (such as the power battery) is determined, the heating power of other active heat-generating components (e.g., the compressor 101) in the thermal management system may be reduced, thereby lowering the overall power consumption of the thermal management system.

As shown in FIG. 2, in the embodiments of the invention, the inlet of the refrigerant channel of the power device heat exchanger 106 is in indirect communication with the outlet of the coolant channel of the battery cooler 105 via a four-way valve 107. In a target operating mode, i.e., when a specific port of the four-way valve 107 is in communication, the coolant flows from the battery cooler 105 to the power device heat exchanger 106.

As shown in FIG. 2, the four-way valve 107 includes four ports, namely a first port, a second port, a third port, and a fourth port. The first port of the four-way valve 107 is in communication (i.e., indirect communication here) with the outlet of the refrigerant channel of the water-cooled condenser 102. The second port of the four-way valve 107 is in communication with the inlet of the refrigerant channel of the battery heat exchanger 104. The third port of the four-way valve 107 is in communication with the outlet of the refrigerant channel of the battery cooler 105. The fourth port of the four-way valve 107 is in communication with the inlet of the refrigerant channel of the power device heat exchanger 106.

In the target operating mode, the third port of the four-way valve 107 is in communication with the fourth port of the four-way valve 107, so that the inlet of the coolant channel of the power device heat exchanger 106 is in communication with the outlet of the coolant channel of the battery cooler 105. It should be noted that, in a case that the third port of the four-way valve 107 is in communication with the fourth port of the four-way valve 107, the first port of the four-way valve 107 is in communication with the second port of the four-way valve 107 simultaneously.

In the embodiments of the present invention, the purpose of providing the four-way valve 107 in the thermal management system is to enable a variety of operating modes and switch between the various operating modes according to actual conditions. In other embodiments, the thermal management system may not include the aforementioned four-way valve 107, and instead, the inlet of the refrigerant channel of the power device heat exchanger 106 may be in direct communication with the outlet of the refrigerant channel of the battery cooler 105. However, in this case, the thermal management system may only operate in the target operating mode and cannot perform other operating modes.

As shown in FIG. 2, the thermal management system further includes a first three-way valve 108. A first port of the first three-way valve 108 is in communication with the second port of the four-way valve 107. A second port of the first three-way valve 108 is in communication with an outlet of the refrigerant channel of the battery heat exchanger 104. A third port of the first three-way valve 108 is in communication with an outlet of the refrigerant channel of the battery cooler 105. It should be noted that in the embodiments of the present invention, the first port of the first three-way valve 108 is in indirect communication with the second port of the four-way valve 107 via an electric heater 109. If the electric heater 109 is not provided, the second port of the first three-way valve 108 may be in direct communication with the second port of the four-way valve 107.

In the target operating mode, the second port of the first three-way valve 108 is in communication with the third port of the first three-way valve 108, so that the outlet of the coolant channel of the battery heat exchanger 104 is in communication with the inlet of the coolant channel of the battery cooler 105. In other operating modes, the first port of the first three-way valve 108 is in communication with the third port of the first three-way valve 108 so that the coolant no longer flows through the battery heat exchanger 104, thus realizing bypass of the battery heat exchanger 104. In specific applications, when ambient temperature and heat generated by the power battery during operation keep the temperature of the power battery within the optimal operating temperature range, and there is no direct thermal management demand for the power battery, the first port of the first three-way valve 108 may be controlled to be in communication with the third port of the first three-way valve 108, so as to bypass the battery heat exchanger 104. In an operating mode such as the target operating mode, the second port of the first three-way valve 108 is in communication with the third port of the first three-way valve 108, so that the coolant absorbs or releases heat when flowing through the battery heat exchanger 104.

As analyzed above and shown in FIG. 2, the thermal management system in the embodiment of the present invention also includes the electric heater 109. An inlet of a coolant channel of the electric heater 109 is in communication with the second port of the four-way valve 107. An outlet of the coolant channel of the electric heater 109 is in communication with the first port of the first three-way valve 108 and the inlet of the coolant channel of the battery heat exchanger 104. The electric heater is configured to generate heat and heat the coolant in certain operating modes. For example, under some extremely low-temperature conditions, even if the compressor 101 operates in a maximum output power state and the power device operates in a maximum heat-generating manner, the heat generated by the compressor 101 and the power device still cannot meet the thermal demands of the management objects or cannot make the compressor 101 maintain the maximum power output state subsequently. In this case, the electric heater 109 may be activated to generate heat and thereby heat the coolant.

Certainly, in some embodiments, for example, when the heat generated by the compressor 101 doing work at maximum power and the heat released by the power device may meet the aforementioned thermal demand, the aforementioned electric heater 109 may not be provided.

Further referring to FIG. 2, in the embodiment of the present invention, the thermal management system also includes a refrigerant-air heat exchanger 110 and a second throttle valve 111. The refrigerant-air heat exchanger 110 is a heat exchanger that realizes heat exchange between the refrigerant and air. The heat exchange between the refrigerant and air may involve the refrigerant releasing heat to the air or the refrigerant absorbing heat from the air.

As shown in FIG. 2, an inlet of a refrigerant channel of the refrigerant-air heat exchanger 110 is in communication with the outlet of the refrigerant channel of the water-cooled condenser 102 via the second throttle valve 111. An outlet of the refrigerant channel of the refrigerant-air heat exchanger 110 is in communication with the first throttle valve 103. In certain operating modes, for example, when the ambient temperature is not particularly low but the thermal management object has a heating demand, a high-pressure refrigerant flowing out of the water-cooled condenser 102 is throttled by the second throttle valve 111 into a low-temperature and low-pressure refrigerant and enters the refrigerant-air heat exchanger 110. The low-temperature and low-pressure refrigerant may absorb heat from the air and evaporate when passing through the refrigerant-air heat exchanger 110, and at least part of the low-temperature and low-pressure refrigerant may turn into gaseous refrigerant. In other words, in certain operating modes, the thermal management system may accumulate heat from the air, thus the working power of components such as the compressor 101 or the electric heater 109 may be reduced, and the power consumption of the thermal management system may be decreased.

Continuing to refer to FIG. 2, in some embodiments, the thermal management system may also include a first bypass valve 112. A refrigerant inlet of the first bypass valve 112 is in communication with the inlet of the refrigerant channel of the refrigerant-air heat exchanger 110. A refrigerant outlet of the first bypass valve 112 is in communication with the outlet of the refrigerant channel of the refrigerant-air heat exchanger 110. The first bypass valve 112 is configured to open in the target operating mode to bypass the refrigerant-air heat exchanger 110 and prevent the high-pressure refrigerant from flowing through the refrigerant-air heat exchanger 110. For example, under an extremely low-temperature condition, a temperature of the high-pressure refrigerant passing through the water-cooled condenser is higher than the ambient temperature. Allowing the high-pressure refrigerant flowing out of the water-cooled condenser 102 to flow through the refrigerant-air heat exchanger 110 would cause the heat of the high-pressure refrigerant to dissipate into the air, thus resulting in heat loss for the entire thermal management system. By providing the first bypass valve 112 and using the first bypass valve 112 to bypass the refrigerant-air heat exchanger 110 under the aforementioned conditions, heat loss of the thermal management system may be reduced.

Further referring to FIG. 2, the thermal management system also includes a first one-way valve 113. A refrigerant inlet of the first one-way valve 113 is in communication with the outlet of the refrigerant channel of the refrigerant-air heat exchanger 110. The first one-way valve 113 is configured to prevent refrigerant from flowing back into the refrigerant-air heat exchanger 110 when the refrigerant-air heat exchanger 110 is bypassed. By providing the first one-way valve 113, under the aforementioned extremely low-temperature environment, the high-pressure refrigerant may be prevented from flowing back into the refrigerant-air heat exchanger 110, which could lead to insufficient available refrigerant, thereby avoiding the problem of the compressor 101 being unable to operate at full power due to insufficient refrigerant.

Further referring to FIG. 2, in some embodiments, the thermal management system also includes a cabin condenser 116. The cabin condenser 116 is a heat exchanger arranged in a vehicle cabin and configured to dissipate heat from the high-temperature and high-pressure refrigerant formed by compression in the compressor 101, which is installed in in a vehicle compartment and may heat the air in the vehicle compartment. An inlet of a refrigerant channel of the cabin condenser 116 is in communication with the refrigerant outlet of the compressor 101. An outlet of the refrigerant channel of the cabin condenser 116 is in communication with the inlet of the refrigerant channel of the water-cooled condenser 102.

As analyzed above, in the embodiments of the present invention, the cabin condenser 116 is configured to heat the cabin, and achieve thermal management of the cabin. In other embodiments, if there is no person in the vehicle cabin and thus no heating demand for the cabin, the cabin condenser 116 may not be provided.

Further referring to FIG. 2, in some embodiments, the thermal management system may also include a water-cooled air radiator 114 and a second three-way valve 115. The water-cooled air radiator 114 is a radiator configured to dissipate heat from the coolant into the air, thereby cooling the coolant. The water-cooled air radiator 114 is configured to achieve heat dissipation of the coolant in at least one other operating mode except the target operating mode. In the aforementioned target operating mode, ambient temperature is low or extremely low, and it is undesirable for the coolant to flow through the water-cooled air radiator 114 for heat dissipation. To be compatible with both the target operating mode and other operating modes, the thermal management system also includes the aforementioned second three-way valve 115.

As shown in FIG. 2, an inlet of a coolant channel of the water-cooled air radiator 114 is in communication with the outlet of the coolant channel of the water-cooled condenser 102. A first port of the second three-way valve 115 is in communication with the outlet of the coolant channel of the water-cooled condenser 102. A second port of the second three-way valve 115 is in communication with an outlet of the coolant channel of the water-cooled air radiator 114. A third port of the second three-way valve 115 is in communication, via the four-way valve 107 and the electric heater 109, with the inlet of the coolant channel of the battery heat exchanger 104. In the target operating mode, the first port of the second three-way valve 115 is in communication with the third port of the second three-way valve 115, so that the water-cooled air radiator 114 is bypassed, and the coolant does not flow through the water-cooled air radiator 114. In other operating modes, the second port of the first three-way valve 108 is in communication with the third port of the first three-way valve 108, and coolant needs to flow through the water-cooled condenser to flow to the four-way valve 107.

Further referring to FIG. 2, in some embodiments, the thermal management system also includes a cabin evaporator 117 and a third throttle valve 118. An inlet of a refrigerant channel of the cabin evaporator 117 is in communication with the outlet of the refrigerant channel of the refrigerant-air heat exchanger 110 via the third throttle valve 118. An outlet of the refrigerant channel of the cabin evaporator 117 is in communication with the refrigerant inlet of the compressor 101 via a gas-liquid separator 120. In some operating modes, after the high-pressure refrigerant passing through the water-cooled condenser 102 and the refrigerant-air heat exchanger 110 is throttled by the third throttle valve 118 into a low-temperature and low-pressure refrigerant, the low-temperature and low-pressure refrigerant absorbs heat and evaporates inside the cabin evaporator 117, thus realizing cooling of the cabin air.

Continuing to refer to FIG. 2, the cabin evaporator 117 and the battery cooler 105 are connected in parallel. In some operating modes, for example, in an operating mode where the ambient temperature is high but the battery needs to be cooled, the refrigerant only needs to flow through the battery cooler 105, and it is not necessary to flow through the cabin evaporator 117. However, at this time, the refrigerant flowing through the battery cooler 105 will flow back into the cabin evaporator 117. To avoid this issue, a second one-way valve 119 is also provided at the outlet of the refrigerant channel of the cabin evaporator 117.

As shown in FIG. 2, to enable the coolant to circulate in the respective circuits, the drive water pumps include a first water pump 121 and a second water pump 122. Additionally, to monitor temperatures of components such as the power battery, the cabin, the coolant and the refrigerant, the thermal management system is also provided with a temperature sensor at an appropriate position. Since the arrangement position of temperature sensor is conventional in the field, the specific arrangement position of the temperature sensor is not indicated in FIG. 2.

As analyzed above, the thermal management system in the embodiments of the present invention may operate in various operating modes, including a power battery cooling mode, a cabin cooling mode, a combined cooling mode, a cabin heating mode, and a heat pump system heating mode. The following analysis explains how the thermal management system operates in the various operating modes. The following operating modes are performed by the thermal management system shown in FIG. 2.

### 1. Power battery cooling mode

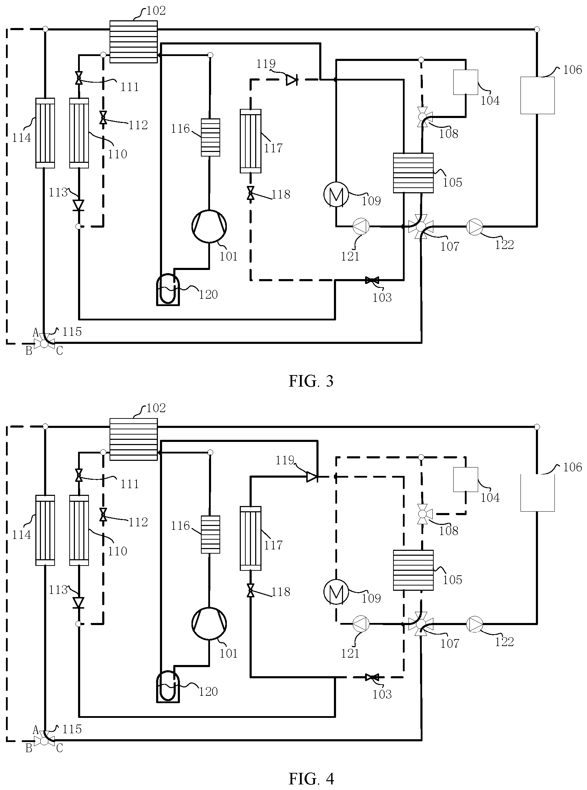

FIG. 3 is a schematic diagram illustrating a cyclic operation of the thermal management system in the power battery cooling mode according to some embodiments. The power battery cooling mode is an operating mode where the power battery is cooled when a temperature of the power battery exceeds an upper limit of the optimal charging and discharging temperature range, so that the temperature of the power battery is reduced to the optimal charging and discharging temperature range as much as possible.

As shown in FIG. 3, in the battery cooling mode: (1) the second port of the four-way valve 107 is in communication with the third port of the four-way valve 107, and the first port of the four-way valve 107 is in communication with the fourth port of the four-way valve 107, so that a coolant circulation pipeline is divided into a battery coolant circulation circuit and a power device coolant circulation circuit; (2) the second port of the first three-way valve 108 is in communication with the third port of the first three-way valve 108; (3) the first bypass valve 112 is closed, and refrigerant flows through the water-cooled air radiator 114; and (4) the second port of the second three-way valve 115 is in communication with the third port of the second three-way valve 115.

Driven by the first water pump 121, coolant in the battery coolant circulation circuit absorbs heat via the battery heat exchanger 104, then passes through the first three-way valve 108 into the battery cooler 105, and in the battery cooler 105, the coolant exchanges heat with the refrigerant to transfer the heat to a low-temperature and low-pressure liquid refrigerant flowing through the battery cooler 105. Subsequently, the cooled coolant flows back to the battery cooler 105 through the four-way valve 107, the first water pump 121, and the electric heater 109.

Driven by the second water pump 122, coolant in the power device coolant circulation circuit flows through the power device heat exchanger 106, then flows through the water-cooled condenser 102 to absorb heat from a high-temperature and high-pressure refrigerant and become a high-temperature coolant. The high-temperature coolant then flows through the refrigerant-air heat exchanger 110 for heat dissipation, and the cooled coolant flows back to the power device heat exchanger 106 through the first three-way valve 108, the four-way valve 107, and the second water pump 122.

After gaseous refrigerant is compressed by the compressor 101 into a high-temperature and high-pressure gaseous refrigerant, the high-temperature and high-pressure gaseous refrigerant flows through the cabin condenser 116 and then passes through the water-cooled condenser 102, and in the water-cooled condenser 102, heat exchange is performed to transfer part of the heat to the coolant. Subsequently, the high-temperature and high-pressure gaseous refrigerant passes through the second throttle valve 111 into the water-cooled air radiator 114, and dissipates heat at the water-cooled air radiator 114 to form a low-temperature and high-pressure liquid refrigerant, then the low-temperature and high-pressure liquid refrigerant flows through the first throttle valve 103, and is throttled into a low-temperature and low-pressure liquid refrigerant by the first throttle valve 103 before entering the battery cooler 105. In the battery cooler 105, the low-temperature and low-pressure liquid refrigerant evaporates and absorbs heat to become a low-temperature and low-pressure gaseous refrigerant. Afterwards, the low-temperature and low-pressure gaseous refrigerant flowing out of the battery cooler 105 passes through the gas-liquid separator 120 and then flows back to the compressor 101 for compression. The water-cooled condenser 102 and the water-cooled air radiator 114 act as condensers, which realize the condensation of the high-temperature and high-pressure gaseous refrigerant, and transfer heat to the coolant in the power device coolant circuit and the outdoor air, respectively.

It should be noted that the power battery cooling mode may be a cooling mode during a heat release process of the battery when the vehicle is running, or a cooling mode during a charging process of the battery when the vehicle is running, which is not limited in the embodiments of the present invention.

### 2. Cabin cooling mode

FIG. 4 is a schematic diagram illustrating a cyclic operation of the thermal management system in the cabin cooling mode according to some embodiments. The cabin cooling mode may be performed when the vehicle is running or in a stationary state. Its core function is to cool the cabin air using refrigerant, so that the cabin temperature is within a set temperature range.

As shown in FIG. 4, in the cabin cooling mode: (1) the first port of the four-way valve 107 is in communication with the fourth port of the four-way valve 107, and the second port of the four-way valve 107 is in communication with the third port of the four-way valve 107, so that a coolant circulation pipeline is divided into a battery coolant circulation circuit and a power device coolant circulation circuit; and at this time, the first water pump 121 in the battery coolant circuit does not operate, so the coolant in that circuit does not circulate; (2) the first bypass valve 112 is closed, and refrigerant flows through the water-cooled air radiator 114; and (3) the second port of the first three-way valve 108 is in communication with the third port of the first three-way valve 108.

In the cabin cooling mode, after gaseous refrigerant is compressed by the compressor 101 into a high-temperature and high-pressure gaseous refrigerant, the high-temperature and high-pressure gaseous refrigerant flows through the cabin condenser 116 and the water-cooled condenser 102 (in some cases, especially when the cabin is at a high temperature, heat from the high-temperature and high-pressure gaseous refrigerant may also be transferred via the water-cooled condenser 102 to the coolant in the power device coolant circuit), then passes through the second throttle valve 111 into the water-cooled air radiator 114, and dissipates heat at the water-cooled air radiator 114 to form a medium-temperature and high-pressure liquid refrigerant. Subsequently, the medium-temperature and high-pressure refrigerant flows through the third throttle valve 118, and is throttled into a low-temperature and low-pressure liquid refrigerant by the third throttle valve 118 and enters the cabin evaporator 117 to evaporate and absorb heat, thus turning into a low-temperature and low-pressure gaseous refrigerant. Afterwards, the low-temperature and low-pressure gaseous refrigerant flowing out of the cabin evaporator 117 passes through the gas-liquid separator 120 and flows back to the compressor 101 for compression. The water-cooled air radiator 114 acts as a heat dissipator (and in some cases, the water-cooled condenser 102 also acts as a heat dissipator), which realizes cooling of the high-temperature and high-pressure gaseous refrigerant.

In the cabin cooling mode, a heat exchange process in the power device coolant circulation circuit is as follows. Driven by the second water pump 122, coolant in the power device coolant circulation circuit flows through the power device heat exchanger 106 and then flows through the water-cooled condenser 102 (in a case that a temperature of the refrigerant flowing through the water-cooled condenser 102 is very high, the coolant will absorb heat of the refrigerant and increases in temperature). Subsequently, the coolant flows through the refrigerant-air heat exchanger 110 for heat dissipation, and the cooled coolant flows back to the power device heat exchanger 106 through the second three-way valve 115, the four-way valve 107, and the second water pump 122. In specific implementations, if the vehicle is in a running state and the power device is at a high temperature in the cabin cooling mode, the power device coolant circulation circuit may simultaneously realize heat dissipation of the power device.

### 3. Combined cooling mode

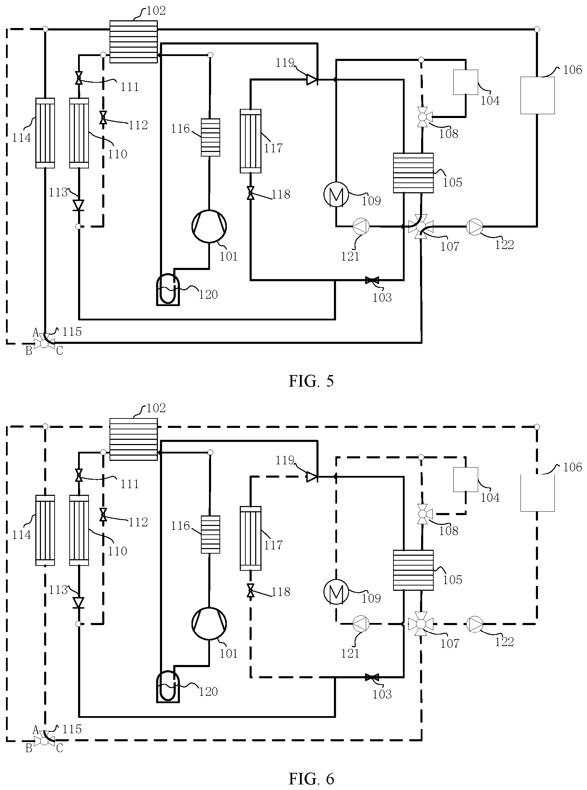

As analyzed above, the combined cooling mode is a mode where the cabin and the battery are simultaneously cooled. FIG. 5 is a schematic diagram illustrating a cyclic operation of the thermal management system in the combined cooling mode according to some embodiments. The combined cooling mode may be performed when the vehicle is running or in a stationary state. Its core function is to use refrigerant to cool both the battery cooler 105 and the cabin air simultaneously, so that both the battery temperature and the cabin temperature are within corresponding set temperature ranges.

As shown in FIG. 5, compared to the aforementioned power battery cooling mode, the combined cooling mode simply simultaneously enables a medium-temperature and high-pressure liquid refrigerant to be throttled by the third throttle valve 118 into a low-temperature and low-pressure liquid refrigerant and then enters the cabin evaporator 117 while in the power battery cooling mode. For convenience, the combined cooling mode is not analyzed in detail herein, and the relevant details may refer to the above descriptions of the power battery cooling mode and the cabin cooling mode.

### 4. Cabin heating mode

The cabin heating mode is a mode where heat from the outside air is absorbed and the cabin air is heated when the ambient temperature is not too low. The cabin heating mode may be performed when the vehicle is running, or when the vehicle is in a stationary state, or may also be performed in a battery charging state under certain special environmental conditions (e.g., when the ambient temperature is low and the battery is charging slowly).

FIG. 6 is a schematic diagram illustrating a cyclic operation of the thermal management system in the cabin heating mode according to some embodiments. As shown in FIG. 6, in some embodiments, in the cabin heating mode, the first water pump 121 in the battery coolant circulation circuit and the second water pump 122 in the power device coolant circulation circuit do not operate, so the coolant in these circuits does not circulate.

In the cabin heating mode, after gaseous refrigerant is compressed by the compressor 101 into a high-temperature and high-pressure gaseous refrigerant, the high-temperature and high-pressure gaseous refrigerant heats the air passing through the cabin condenser 116 when flowing through the cabin condenser 116, thereby realizing heating of the cabin air and becoming a medium-temperature and high-pressure liquid refrigerant. The medium-temperature and high-pressure liquid refrigerant then passes through the water-cooled condenser 102, and at this time, the water-cooled condenser 102 only acts as a refrigerant passage and does not participate in heat exchange. After the water-cooled condenser 102, the medium-temperature and high-pressure refrigerant is throttled by the second throttle valve 111 into a low-temperature and low-pressure liquid refrigerant, then flows through the water-cooled air radiator 114, and the low-temperature and low-pressure liquid refrigerant evaporates and absorbs heat in the water-cooled air radiator 114 to become a low-temperature and low-pressure gaseous refrigerant. Subsequently, the low-temperature and low-pressure gaseous refrigerant passes through the first throttle valve 103 and the battery cooler 105, and at this time, the battery cooler 105 only acts as a passage does not transfer heat. Finally, the low-temperature and low-pressure gaseous refrigerant flowing out of the battery cooler 105 flows through the gas-liquid separator 120 and returns to the compressor 101.

### 5. Heat pump system heating mode

The heat pump system heating mode is an operating mode where both the cabin and the battery are heated by the compressor 101 in the heat pump system performing work and generating heat. The heat pump system heating mode is a heating mode in a low or extremely low ambient temperature. In the heat pump system heating mode, the power battery requires heating, while the cabin may or may not require heating according to an actual temperature and a set temperature. Embodiments of the present invention are described below by taking a case where both the power battery and the cabin require heating as an example.

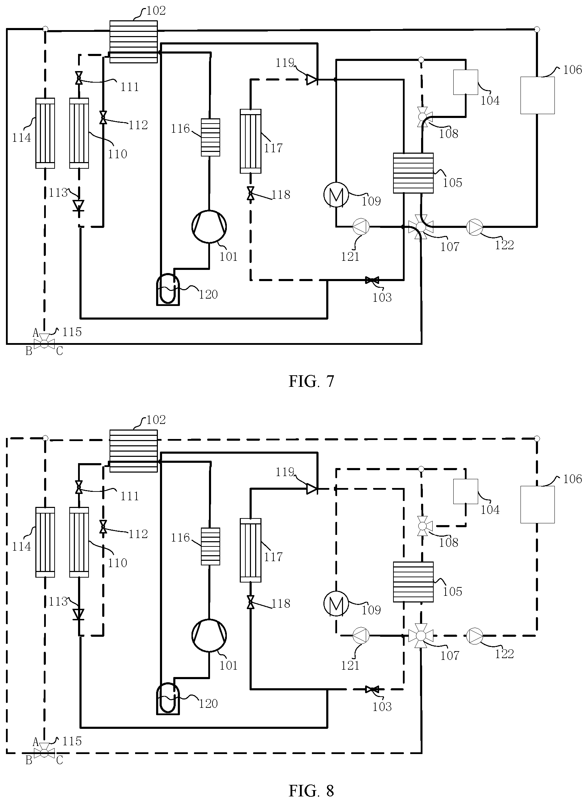

FIG. 7 is a schematic diagram illustrating a cyclic operation of the thermal management system in the heat pump system heating mode according to some embodiments. As shown in FIG. 7, in the heat pump system heating mode: (1) the first port of the four-way valve 107 is in communication with the second port of the four-way valve 107, and the third port of the four-way valve 107 is in communication with the fourth port of the four-way valve 107; (2) the second port of the first three-way valve 108 is in communication with the third port of the first three-way valve 108, so that coolant may flow through the battery heat exchanger 104; (3) the first port of the second three-way valve 115 is in communication with the third port of the second three-way valve 115, so that the water-cooled air radiator 114 is bypassed; and (4) the first bypass valve 112 is opened, so that the refrigerant-air heat exchanger 110 is bypassed.

In the heat pump system heating mode, a heat exchange process of the coolant is as follow. Driven by the second water pump 122 and/or the first water pump 121, the coolant flows through the first water pump 121 and the electric heater 109; and at this time, a heating function of the electric heater 109 is off, and the electric heater 109 only acts as a coolant passage. The coolant then releases heat and cools down through the battery heat exchanger 104, passes through the first three-way valve into the battery cooler 105, and further cools down in the battery cooler 105. Subsequently, the coolant enters and flows through the power device heat exchanger 106 through the four-way valve 107 and the second water pump 122. As the coolant passes through the power device heat exchanger 106, the heat absorption and release characteristics of the coolant will be different depending on heat generated by the operation of the power device and a temperature of the power device. If the power device generates heat due to operation and thus has a high temperature (e.g., high-speed rotation or locked rotor), the coolant absorbs heat and increases in temperature. If the power device has a low temperature, the coolant may even release heat. However, during vehicle operation, the coolant generally absorbs heat and increases in temperature at the power device heat exchanger 106. The coolant then flows through the water-cooled condenser 102 to continue to absorb heat and increase in temperature, and flows back to the first water pump 121 after flowing through the second three-way valve 115, thus completing a cycle in the coolant circulation circuit.

In the heat pump system heating mode, a heat exchange process of the refrigerant circuit is as follows. After gaseous refrigerant is compressed by the compressor 101 into a high-temperature and high-pressure refrigerant, the high-temperature and high-pressure refrigerant heats the air passing through the cabin condenser 116 when flowing through the cabin condenser 116, thereby realizing heating of the cabin air and becoming a medium-temperature and high-pressure liquid refrigerant. The medium-temperature and high-pressure refrigerant passes through the water-cooled condenser 102 to further dissipate heat and increase the subcooling degree. Subsequently, the refrigerant flows through the first bypass valve 112, and is throttled by the first throttle valve 103 into a low-pressure and low-temperature liquid refrigerant. The low-temperature and low-pressure liquid refrigerant absorbs heat from the air when passing through the battery cooler 105 and becomes a low-temperature and low-pressure gaseous refrigerant. The low-temperature and low-pressure gaseous refrigerant passes through the gas-liquid separator 120 and then returns to the compressor 101, thus completing the cycle.

As analyzed above, in the heat pump system heating mode described above, a heating function of the electric heater 109 is off. This is a control strategy when heat generated by the compressor through work and heat dissipated by the power device may meet the heating demands of the cabin and the power battery. If the heat generated by the compressor through work and the heat dissipated by the power device cannot meet the heating demands of the cabin and the power battery, the electric heater 109 may also be activated to work to heat the coolant, thus providing additional heat to the thermal management system.

### 6. Cabin dehumidification and heating mode

The cabin dehumidification and heating mode is an operating mode configured to dehumidify and heat the cabin air in a case that the ambient temperature is not particularly low but the air humidity is high. FIG. 8 is a schematic diagram illustrating a cyclic operation of the thermal management system in the cabin dehumidification and heating mode according to some embodiments. As shown in FIG. 8, in a single-evaporation dehumidification mode: (1) the first water pump 121 and the second water pump 122 do not operate, that is, the coolant does not circulate; (2) the first bypass valve 112 is closed, and the refrigerant flows through the external air heat exchanger; (3) the first throttle valve 103 is closed; (4) the second throttle valve 111 is fully open; and (3) the third throttle valve 118 is open for throttling.

In the cabin dehumidification and heating mode, a heat exchange process of refrigerant is as follows: after gaseous refrigerant is compressed by the compressor 101 into a high-temperature and high-pressure refrigerant, the high-temperature and high-pressure gaseous refrigerant heats the air passing through the cabin condenser 116 when flowing through the cabin condenser 116, thereby realizing heating of the cabin air. Subsequently, the high-temperature and high-pressure gaseous refrigerant flows through the water-cooled condenser 102, and at this time, the water-cooled condenser 102 only acts as a passage. Next, the high-temperature and high-pressure refrigerant passes through the second throttle valve 111 and the water-cooled air radiator 114, and continues to release heat at the water-cooled air radiator 114, thus becoming a medium-temperature and high-pressure liquid refrigerant. Then, the medium-temperature and high-pressure liquid refrigerant is throttled by the third throttle valve 118 into a low-temperature and low-pressure liquid refrigerant, and flows through the cabin evaporator 117. The low-temperature and low-pressure liquid refrigerant evaporates and absorbs heat in the cabin evaporator 117 and becomes a low-temperature and low-pressure gaseous refrigerant, thereby realizing cooling and dehumidification of the air flowing through the cabin evaporator 117. The low-temperature and low-pressure gaseous refrigerant passes through the gas-liquid separator 120 and then returns to the electric compressor 101, thus completing the cycle.

It should be noted that in the cabin dehumidification and heating mode, the cabin air first flows through the cabin evaporator 117 for cooling and dehumidification before passing through the cabin condenser 116 for absorbing heat and warming up.

### 7. Mode of cabin dehumidification and heating plus battery cooling

The mode of cabin dehumidification and heating plus battery cooling is an operating mode configured to dehumidify and heat the cabin air while simultaneously cooling the battery in a case that the ambient temperature is not particularly low and the air humidity is high.

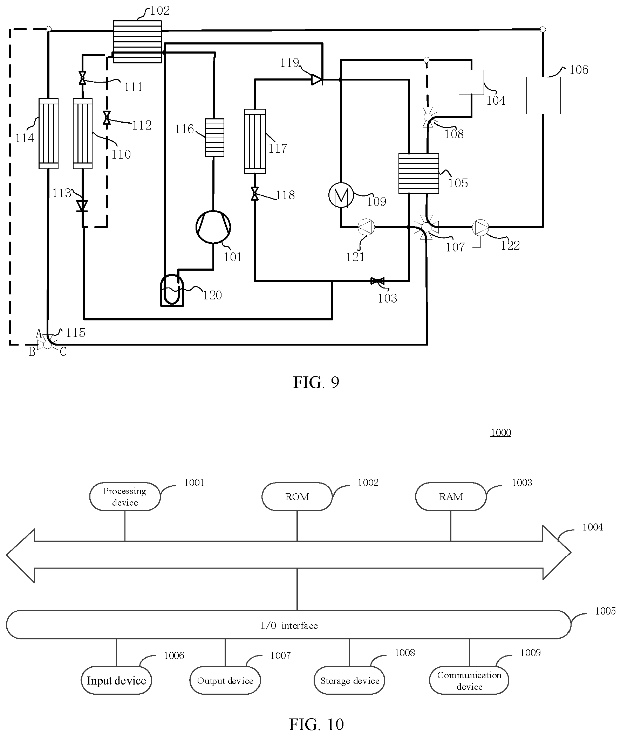

FIG. 9 is a schematic diagram illustrating a cyclic operation of the thermal management system in a dual-evaporation dehumidification mode according to some embodiments. As shown in FIG. 9, (1) the first port of the four-way valve 107 is in communication with the second port of the four-way valve 107, and the third port of the four-way valve 107 is in communication with the fourth port of the four-way valve 107; (2) the second port of the first three-way valve 108 is in communication with the third port of the first three-way valve 108, so that the battery heat exchanger 104 is not bypassed; (3) the first bypass valve 112 is closed, so that the refrigerant-air heat exchanger 110 is not bypassed; and (4) the second port of the second three-way valve 115 is in communication with the third port of the second three-way valve 115, so that the water-cooled air radiator 114 is not bypassed.

In the mode of cabin dehumidification and heating plus battery cooling, a heat exchange process of refrigerant in a refrigerant circuit 200 is as follows. After gaseous refrigerant is compressed by the compressor 101 into a high-temperature and high-pressure refrigerant, the high-temperature and high-pressure gaseous refrigerant heats the air passing through the cabin condenser 116 when flowing through the cabin condenser 116, thereby realizing heating of the air in the cabin. Subsequently, the high-temperature and high-pressure refrigerant flows through the water-cooled condenser 102 and releases heat. Next, the high-temperature and high-pressure gaseous refrigerant passes through the second throttle valve 111 and then passes through the water-cooled air radiator 114, and continues to release heat at the water-cooled air radiator 114 and becomes a medium-temperature and high-pressure liquid refrigerant. Thereafter, part of the medium-temperature and high-pressure liquid refrigerant is throttled by the third throttle valve 118 into a low-temperature and low-pressure liquid refrigerant and flows through the cabin evaporator 117, and evaporates and absorbs heat in the cabin evaporator 117 to become a low-temperature and low-pressure gaseous refrigerant, thereby realizing cooling and dehumidification of the air flowing through the cabin evaporator 117. Another part of the low-temperature and high-pressure liquid refrigerant is throttled by the first throttle valve 103 and flows through the battery cooler 105, and in the battery cooler 105, evaporates and absorbs heat from coolant in the battery coolant circulation circuit, thus becoming a low-temperature and low-pressure gaseous refrigerant. Finally, the low-temperature and low-pressure gaseous refrigerant passes through the gas-liquid separator 120 and returns to the electric compressor 101, thus completing the cycle.

In the mode of cabin dehumidification and heating plus battery cooling, a heat exchange process of coolant is as follows. Driven by the first water pump 121, the coolant flows through the electric heater 109, and at this time, the electric heater 109 does not operate and only acts as a passage. Subsequently, the coolant flows through the battery heat exchanger 104 to absorb heat and increase in temperature. Thereafter, the coolant passes through the first three-way valve 108 and then enters the battery heat exchanger 104. Finally, the cooled coolant passes through the four-way valve 107 and the second water pump 122 before flowing through the power device heat exchanger 106. When flowing through the power device heat exchanger 106, the coolant may increase in temperature or decrease in temperature, depending specifically on a heat generation condition of the power device during operation. Subsequently, the coolant flows through the water-cooled condenser 102 to absorb heat and increase in temperature, and releases heat and decreases in temperature when flowing through the water-cooled air radiator 114. Afterwards, the coolant flows back to the electric heater 109 through the second three-way valve 115, the four-way valve 107, and the first water pump 121.

Furthermore, the thermal management system in the embodiments of the present invention may also perform other operating modes known in the art, which will not be elaborated herein.

In addition to providing the aforementioned thermal management system, embodiments of the present invention also provide a thermal management system control apparatus. The thermal management control apparatus includes a mode determination unit and a control unit. The mode determination unit acquires a detected temperature and determines a target operating mode according to the detected temperature. The control unit controls a thermal management system according to a control strategy of the target operating mode to cause the thermal management system to be in the target operating mode.

Embodiments of the present invention also provide a control device. The control device includes a processor and a memory, in which the memory stores a computer program, and when the computer program is executed by the processor, an operating mode of a thermal management system may be determined according to a condition of a temperature sensor in the thermal management system, and the thermal management system is controlled to operate according to the operating mode. FIG. 10 is a schematic diagram of a control device according to an embodiment of the present invention. Referring specifically to FIG. 10, it shows a schematic diagram of a control device suitable for implementing embodiments of the present invention. The control device shown in FIG. 10 is merely an example and should not impose any limitations on the functionality and application scope of the embodiments of the present invention.

As shown in FIG. 10, the control device 1000 may include a processing device (e.g., a central processing unit, a graphics processing unit, etc.) 1001, which may perform various appropriate actions and processing according to programs stored in a read-only memory (ROM) 1002 or programs loaded into a random access memory (RAM) 1003 from a storage device 1008. Various programs and data required for the operation of the control device 1000 are also stored in the RAM 1003. The processing device 1001, the ROM 1002, and the RAM 1003 are connected to each other via a bus 1004. An input/output (I/O) interface 1005 is also connected to the bus 1004.

Typically, the following devices may be connected to the I/O interface 1005, i.e., an input device 1006 including, for example, a touch screen, a touch pad, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the control device 1000 to communicate wirelessly or wiredly with other devices to exchange data. Although FIG. 10 shows the control device 1000 with various devices, it should be understood that it is not required to implement or have all the shown devices. More or fewer devices may be implemented or provided alternatively.

In particular, according to embodiments of the present invention, the processes described above with reference to flowcharts may be implemented as a computer software program. For example, embodiments of the present invention include a computer program product, which includes a computer program carried on a non-transitory computer-readable medium, and the computer program includes program code for executing the method illustrated in the flowchart. In such an embodiment, the computer program may be downloaded and installed from a network via the communication device 1009, or installed from the storage device 1008, or installed from the ROM 1002. When the computer program is executed by the processing device 1001, the aforementioned functions defined in the method of the embodiments of the present invention are performed.

It should be noted that the computer-readable medium described above in the present invention may be a computer-readable signal medium or a computer-readable storage medium or any combination thereof. A computer-readable storage medium may be, for example, but not limited to, an electronic, magnetic, optical, electromagnetic, infrared, or semiconductor system, apparatus, or device, or any suitable combination thereof. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present invention, the computer-readable storage medium may be any tangible medium that contains or stores a program, and the program may be used by or in connection with an instruction execution system, apparatus, or device. In the present invention, a computer-readable signal medium may include a propagated data signal in baseband or as part of a carrier wave, in which computer-readable program code is carried. Such a propagated data signal may take various forms, including but not limited to an electromagnetic signal, an optical signal, or any suitable combination thereof. The computer-readable signal medium may also be any computer-readable medium other than the computer-readable storage medium, which may send, propagate, or transmit a program configured to be used by or in connection with an instruction execution system, apparatus, or device. Program code embodied on the computer-readable medium may be transmitted using any appropriate medium, including but not limited to: wires, optical cables, RF (radio frequency), etc., or any suitable combination thereof.

In some implementations, a client and a server may communicate using any currently known or future developed network protocol, such as a hypertext transfer protocol (HTTP), and may be interconnected with any form or medium of digital data communication (e.g., a communication network). Examples of the communication network include a local area network (LAN), a wide area network (WAN), an internetwork (e.g., Internet), and a peer-to-peer network (e.g., an ad hoc peer-to-peer network), as well as any currently known or future developed network.

The aforementioned computer-readable medium may be included in the aforementioned control device; or may exist separately and not be incorporated into the control device.

The flowchart and block diagram in the drawings illustrate a system architecture, functionality, and operation that may be implemented by the system, the method, and the computer program product according to various embodiments of the present invention. In this regard, each block in the flowchart or block diagram may represent a module, a program segment, or a part of code, which contains one or more executable instructions configured to implement a specified logical function. It should also be noted that, in some alternative implementations, a function noted in the block may occur in an order different from an order noted in the drawings. For example, two blocks shown in succession may, in fact, be performed substantially concurrently, or they may sometimes be performed in a reverse order, depending on a functionality involved. It should also be noted that each block in the block diagram and/or flowchart, and a combination of blocks in the block diagram and/or flowchart, may be implemented by a dedicated hardware-based system that performs a specified function or operation, or may be implemented by a combination of dedicated hardware and computer instructions.

The function described above in this document may be performed, at least in part, by one or more hardware logic components. For example, without limitation, exemplary types of hardware logic components that may be used include: a field-programmable gate array (FPGA), an application-specific integrated circuit (ASIC), an application-specific standard product (ASSP), a systems-on-a-chip (SOC), a complex programmable logic device (CPLD), and the like.

In the context of the present invention, a machine-readable medium may be a tangible medium that may contain or store a program configured to be used by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

Embodiments of the present invention also provide a computer-readable storage medium, in which a computer program is stored. When the computer program is executed by a processor, the method according to any of the aforementioned method embodiments may be implemented. The execution manner and beneficial effects are similar, which will not be repeated herein.

Embodiments of the present invention also provide a vehicle. The vehicle includes the aforementioned thermal management system. By controlling the thermal management system according to the control methods in the various operating modes described above, the corresponding thermal management operating modes may be achieved.

It should be noted that in the present invention, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device including a series of elements includes not only those elements, but also other elements that are not expressly listed, or also includes elements inherent in such a process, method, article, or device. Without further limitation, an element defined by the phrase "comprising a ..." does not exclude the presence of additional identical elements in the process, method, article or device comprising the element.

The above description is only specific embodiments of the present invention, so that those skilled in the art can understand or implement the present invention. Various modifications to these embodiments will be apparent to those skilled in the art, and the general principles defined herein may be implemented in other embodiments without departing from the scope of the present invention. Therefore, the present invention will not be limited to the embodiments described herein, but is to be accorded the widest scope consistent with the principles and novel features disclosed herein.

## Claims

1. A thermal management system, comprising a compressor, a water-cooled condenser, a first throttle valve, a battery heat exchanger, and a battery cooler,
wherein a refrigerant outlet of the compressor is in communication with an inlet of a refrigerant channel of the water-cooled condenser; and an outlet of the refrigerant channel of the water-cooled condenser is in communication with an inlet of a refrigerant channel of the battery cooler via the first throttle valve; and
wherein an outlet of a coolant channel of the water-cooled condenser is in communication with an inlet of a coolant channel of the battery heat exchanger; an outlet of the coolant channel of the battery heat exchanger is in communication with an inlet of a coolant channel of the battery cooler, and an outlet of the refrigerant channel of the battery cooler is in communication with a refrigerant inlet of the compressor.

2. The thermal management system according to claim 1, further comprising a power device heat exchanger,
wherein, in a target operating mode, an inlet of a coolant channel of the power device heat exchanger is in communication with an outlet of the coolant channel of the battery cooler; and
an outlet of the coolant channel of the power device heat exchanger is in communication with an inlet of the coolant channel of the water-cooled condenser.

3. The thermal management system according to claim 2, further comprising a four-way valve,
wherein a first port of the four-way valve is in communication with the outlet of the refrigerant channel of the water-cooled condenser, a second port of the four-way valve is in communication with an inlet of a refrigerant channel of the battery heat exchanger, a third port of the four-way valve is in communication with the outlet of the refrigerant channel of the battery cooler, and a fourth port of the four-way valve is in communication with an inlet of a refrigerant channel of the power device heat exchanger; and
in the target operating mode, the third port of the four-way valve is in communication with the fourth port of the four-way valve, so that the inlet of the coolant channel of the power device heat exchanger is in communication with the outlet of the coolant channel of the battery cooler.

4. The thermal management system according to claim 3, further comprising a first three-way valve,
wherein a first port of the first three-way valve is in communication with the second port of the four-way valve, a second port of the first three-way valve is in communication with an outlet of the refrigerant channel of the battery heat exchanger, and a third port of the first three-way valve is in communication with the inlet of the refrigerant channel of the battery cooler; and
in the target operating mode, the second port of the first three-way valve is in communication with the third port of the first three-way valve, so that the outlet of the coolant channel of the battery heat exchanger is in communication with the inlet of the coolant channel of the battery cooler.

5. The thermal management system according to claim 4, further comprising an electric heater,
wherein an inlet of a coolant channel of the electric heater is in communication with the second port of the four-way valve, and an outlet of the coolant channel of the electric heater is in communication with the first port of the first three-way valve and the inlet of the coolant channel of the battery heat exchanger.

6. The thermal management system according to any one of claims 1 to 5, further comprising a refrigerant-air heat exchanger and a second throttle valve,
wherein an inlet of a refrigerant channel of the refrigerant-air heat exchanger is in communication with the outlet of the refrigerant channel of the water-cooled condenser via the second throttle valve, and an outlet of the refrigerant channel of the refrigerant-air heat exchanger is in communication with the first throttle valve.

7. The thermal management system according to claim 6, further comprising a first bypass valve,
wherein a refrigerant inlet of the first bypass valve is in communication with the inlet of the refrigerant channel of the refrigerant-air heat exchanger, and a refrigerant outlet of the first bypass valve is in communication with the outlet of the refrigerant channel of the refrigerant-air heat exchanger; and the first bypass valve is configured to be opened in a target operating mode to bypass the refrigerant-air heat exchanger.

8. The thermal management system according to claim 7, further comprising a first one-way valve,
wherein a refrigerant inlet of the first one-way valve is in communication with the outlet of the refrigerant channel of the refrigerant-air heat exchanger; and the first one-way valve is configured to prevent refrigerant from flowing back into the refrigerant-air heat exchanger in a case that the refrigerant-air heat exchanger is bypassed.

9. The thermal management system according to any one of claims 1 to 5, further comprising a cabin evaporator,
wherein an inlet of a refrigerant channel of the cabin evaporator is in communication with the refrigerant outlet of the compressor, and an outlet of the refrigerant channel of the cabin evaporator is in communication with the inlet of the refrigerant channel of the water-cooled condenser.

10. The thermal management system according to any one of claims 1 to 5, further comprising a water-cooled air radiator and a second three-way valve,
wherein an inlet of a coolant channel of the water-cooled air radiator is in communication with the outlet of the coolant channel of the water-cooled condenser; and
a first port of the second three-way valve is in communication with the outlet of the coolant channel of the water-cooled condenser, a second port of the second three-way valve is in communication with an outlet of the coolant channel of the water-cooled air radiator, and a third port of the second three-way valve is in communication with the inlet of the coolant channel of the battery heat exchanger.

11. The thermal management system according to any one of claims 1 to 5, further comprising a cabin evaporator and a third throttle valve,
wherein an inlet of a refrigerant channel of the cabin evaporator is in communication with the outlet of the refrigerant channel of the water-cooled condenser via the third throttle valve.

12. A vehicle, comprising the thermal management system according to any one of claims 1 to 11.
